# EUROPÄISCHE PATENTSCHRIFT

(11) **EP 1 224 894 B1**
(45) Veröffentlichungstag und Bekanntmachung des Hinweises auf die Patenterteilung: **16.03.2005**
(21) Anmeldenummer: 02000375.2
(22) Anmeldetag: 05.01.2002
(51) Int. Cl.: A47J 31/24

(54) **Kaffeegetränkzubereitungsautomat, insbesondere Espressoautomat**
Coffee Machine, more particularly Espresso Machine
Machine à café, en particulier machine pour preparation d'espresso

(30) Priorität: 16.01.2001 DE 20100700 U
(43) Veröffentlichungstag der Anmeldung: 24.07.2002
(73) Patentinhaber: Eugster/Frismag AG, 8590 Romanshorn (CH)
(72) Erfinder: Schöb, Markus, 9240 Uzwil (CH)
(74) Vertreter: Schubert, Siegmar, Dipl.-Ing.

(56) Entgegenhaltungen:
- WO-A-00/45685
- US-A- 4 572 060
- US-A- 4 662 271
- US-A- 5 498 757
- US-A- 5 896 806

## Beschreibung

Die Erfindung betrifft einen Kaffeegetränkzubereitungsautomat, insbesondere Espressoautomat, der geeignet ist, ein Kaffeeheißgetränk einer aus einer Vielzahl von Zubereitungsvarianten auswählbaren Zubereitungsvariante zu erzeugen, wobei eine Vielzahl von Schaltkontaktgruppen vorgesehen ist, von denen je eine einer Zubereitungsvariante zugeordnet ist und von denen jeweils eine zur Auswahl einer der Zubereitungsvarianten betätigbar ist, während die anderen Schaltkontaktgruppen gesperrt sind, sowie mit einem Startkontakt, bei dessen Betätigung eine Zubereitung der mit einem der Schaltkontaktgruppen ausgewählten Zubereitungsvariante auslösbar ist.

Solche ein Kaffeegetränkzubereitungsautomat ist aus dem US-Patent 5 896 806 bekannt.

Mit derartigen bekannten Kaffeegetränkzubereitungsautomaten, insbesondere Espressoautomaten, ist es möglich, verschiedene Kaffeetränke als Zubereitungsvarianten herzustellen, z.B. Espresso, Espresso double, Irish Coffee, Kaffee Creme, Morgenkaffee, Mokka, Cappuccino, Milchschaum.

Zur Auswahl einer dieser Zubereitungsvarianten ist nach dem Stand der Technik eine Drucktastenanordnung vorgesehen, wobei jeder Zubereitungsvariante eine Drucktaste zugeordnet ist, die eine Schaltkontaktgruppe betätigt, während die Betätigung der anderen Schaltkontaktgruppen mittels der anderen Drucktasten gesperrt ist. Unter einer Schaltkontaktgruppe kann hier auch ein einziger Schaltkontakt verstanden werden. Mit den Drucktasten erfolgt also eine Auswahl einer Schaltkontaktgruppe aus einer Vielzahl von Schaltkontaktgruppen. Mit jeder der Schaltkontaktgruppen wird ein für eine jeweils gewünschte ausgewählte Zubereitungsart vorgegebenes Ablaufprogramm einer elektrischen Steuerung ausgewählt. Um dieses Ablaufprogramm zu starten, ist ein Startkontakt vorgesehen, der durch eine weitere Drucktaste betätigt wird, die von den anderen Drucktasten abgesetzt ist.

Die bei einer Vielzahl von Zubereitungsvarianten erforderliche hohe Anzahl von Drucktasten bedingt einen erheblichen technischen Aufwand, insbesondere wegen der gegenseitigen Verriegelung der Drucktasten, und erschwert einer Bedienungsperson die Übersicht über die Auswahlmöglichkeiten. Die Bedienung ist insofern nicht einfach, als nach der Auswahl einer Zubereitungsvariante durch die räumlich abgesetzte Taste auch der Zubereitungsvorgang ausgelöst werden muß.

Der vorliegenden Erfindung liegt die Aufgabe zugrunde, die Auswahl der Zubereitungsvarianten übersichtlicher zu gestalten, die Bedienung zur Stellung der ausgewählten Zubereitungsvariante zu vereinfachen und den Produktionsaufwand für den Kaffeegetränkzubereitungsautomaten herabzusetzen.

Diese Aufgabe wird erfindungsgemäß dadurch gelöst, daß die Schaltkontaktgruppen Bestandteile eines mit einem Drehknopf versehenen Auswahldrehschalters sind, die in jeder rastbaren Drehstellung einer Zubereitungsvariante zugeordnet ist und der in jeder der rastbaren Drehstellungen eine der Kontaktgruppen betätigt, und daß der Auswahldrehschalter weiterhin wenigstens ein Betätigungselement zur Betätigung des Startkontakts umfaßt.

Mit einem solchen Auswahldrehschalter wird die Übersicht über die Auswahlmöglichkeiten verbessert, weil die interessierenden Angaben der möglichen Getränkevarianten bzw. die entsprechenden Symbole auf dem Drehknopf des Auswahldrehschalters bzw. in dessen Nähe zusammengefaßt sein können. Die Bedienung wird erleichtert, weil zur Auswahl stets nur ein und derselbe Auswahldrehschalter zu drehen ist, was vorzugsweise in jeder von zwei möglichen Drehrichtungen erfolgen kann. Mit dem ebenfalls bei dem Auswahldrehschalter angeordneten Startkontakt kann bequem das Ablaufprogramm gestartet werden. Da der Auswahldrehschalter in jeder rastbaren Drehstellung nur eine Kontaktgruppe betätigen kann, entfallen weitere Mittel zur gegenseitigen Verriegelung der Kontaktgruppen. Außerdem gestattet der Auswahldrehschalter eine ästhetisch ansprechende Bauweise des Kaffeegetränkzubereitungsautomaten.

Die Bedienung des Kaffeegetränkzubereitungsautomaten nach Auswahl bzw. Vorwahl einer gewünschten Zubereitungsvariante kann in einer Ausführungsform gemäß Anspruch 2 dadurch vereinfacht werden, daß das Betätigungselement zur Betätigung des Startkontakts eine verschiebbare Lagerung wenigstens eines Bestandteils des Auswahldrehschalters umfaßt, der mit dem Startkontakt zur Betätigung durch Schub in Verbindung steht. Insbesondere kann der verschiebbare Bestandteil des Auswahldrehschalters dessen Schaltwelle sein, an dem der Drehknopf befestigt ist. Das vorgewählte Ablaufprogramm läßt sich dann in bedienungsfreundlicher Weise dadurch starten, daß derselbe Drehknopf, der zur Auswahl der Zubereitungsvarianten in eine bestimmte Drehstellung gedreht wurde, anschließend - eventuell ohne den Drehknopf zuvor loszulassen - gedrückt wird, wodurch das vorgewählte Ablaufprogramm gestartet wird.

In einer zweiten Ausführungsform nach Anspruch 3 kann aber auch das Betätigungselement eine zentral in dem Drehknopf angeordnete Starttaste sein, die mit dem Startkontakt in Verbindung steht. Die Starttaste ist nach Verstellung des Drehknopfes auf kürzestem Wege und sinnfällig erreichbar.

Zur übersichtlichen, augenfälligen Darstellung der Auswahlmöglichkeiten der Zubereitungsvarianten, aber auch der ausgewählten Zubereitungsvariante ist gemäß Anspruch 4 um den Drehknopf des Auswahldrehschalter eine Displayanordnung mit je einem Symbol jeder auswählbaren Zubereitungsvariante gerätefest angeordnet, auf die eine Markierung des Drehknopfes durch dessen Drehung einstellbar ist. Diese Variante hat den Vorteil, daß eine Beleuchtung der Displayanordnung ebenfalls gerätefest ist und insofern keine Stromzuführung zu dem Drehknopf erforderlich ist.

Alternativ kann gemäß Anspruch 5 eine Auswahldisplayanordnung mit einem Symbol jeder auswählbaren Zubereitungsvariante auf dem Druckknopf des Auswahldrehschalters in Umfangsrichtung so angeordnet sein, daß jeweils ein Segment der Auswahldisplayanordnung auf eine gewählte feste Markierung einstellbar ist. Diese Variante hat den Vorteil, daß die ausgewählte Zubereitungsvariante stets an der gerätefesten Markierung ablesbar ist.

Besonders gut ablesbar ist das Symbol der ausgewählten Zubereitungsvariante gemäß Anspruch 6, wonach das jeweils mit dem Drehknopf des Auswahldrehschalters eingestellte Symbol hinterleuchtet ist.

Hierzu genügt bei den Ausführungsformen des Drehknopfes, bei denen die Symbole der Zubereitungsvarianten auf dem Drehknopf sichtbar sind und mit diesem einstellbar sind, nur ein Leuchtmittel, z.B. eine Leuchtdiode, das gemäß Anspruch 7 angeordnet ist. Sonst wird zur Hinterleuchtung zweckmäßig hinter jedem Symbol der Auswahldisplayanordnüng eine zuverlässige Leuchtdiode mit geringem Energiebedarf angeordnet.

Drei Ausführungsformen der Erfindung werden im folgenden anhand einer Zeichnung mit drei Figuren beschrieben, woraus sich weitere Merkmale und Vorteile der Erfindung ergeben können. Es zeigt:
- Fig. 1: eine Vorderansicht auf eine erste Ausführungsform eines Drehknopfes eines Auswahldrehschalters mit Symbolen an einem Ausschnitt eines Espressoautomaten
- Fig. 2: eine Variante des Drehknopfes des Auswahldrehschalters und
- Fig. 3: eine zweite Variante des Drehknopfes mit außerhalb des Drehknopfes liegenden gerätefesten Symbolen.

In den Figuren sind gleiche Teile mit denselben Bezugszeichen bezeichnet.

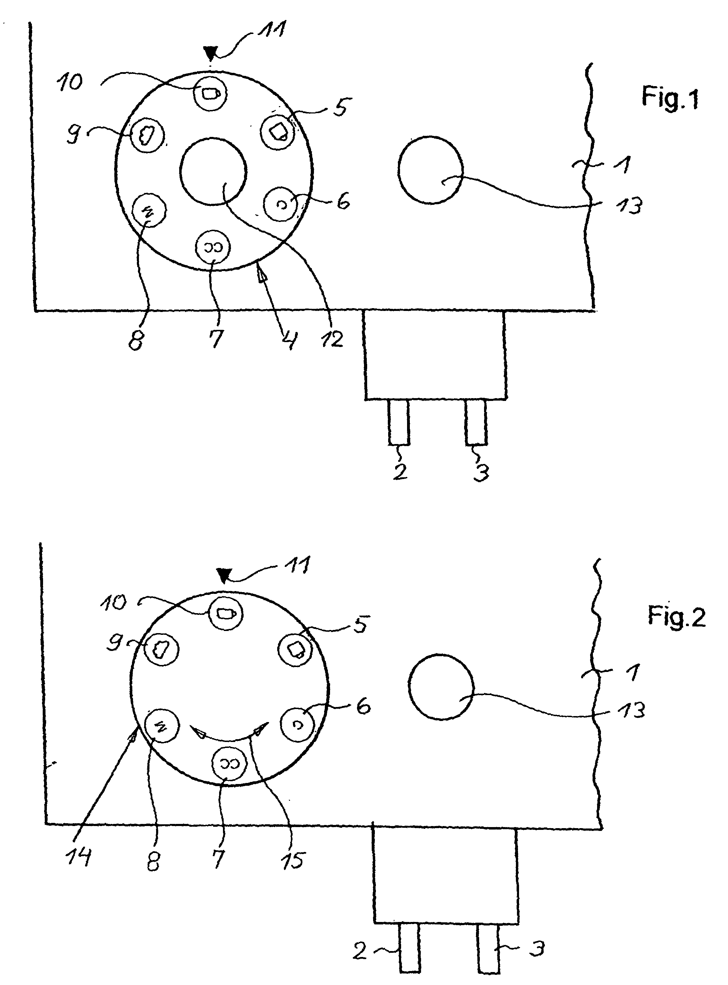

In Fig. 1 ist mit 1 ein Abschnitt eines Espressoautomatengehäuses bezeichnet, von dem unten zwei Getränkeausläufe 2 und 3 herausragen.

Das gewünschte Kaffeegetränk bzw. eine Zubereitungsvariante, die den Getränkeausläufen 2 und 3 entnommen werden soll, kann mit einem Drehknopf 4 eines Auswahldrehschalters eingestellt bzw. vorgewählt werden. Der Auswahldrehschalter selbst, insbesondere dessen Schaltkontaktgruppen, sind hinter dem Drehknopf 4 bzw. dem Espressoautomatengehäuse 1 abgedeckt. Sinnfällig erkennbar sind auf einer nicht bezeichneten Stirnseite des Drehknopfes 4 Symbole 5 - 10, die verschiedene Zubereitungsvarianten symbolisieren, welche mit dem Drehknopf 4 einstellbar sind. Über dem Drehknopf 4 befindet sich auf dem Espressoautomatengehäuse 1 eine feststehende Markierung 11. Diese verdeutlicht, daß mit dem Drehknopf 4 die Zubereitungsvariante eingestellt ist, deren Symbol sich unmittelbar unter der Markierung 11 befindet, hier das Symbol 10.

Zum Start eines Ablaufprogramms gemäß der dieserart eingestellten bzw. vorgewählten Zubereitungsvariante ist zentral in dem Drehknopf 4 eine Starttaste 1 2 verschiebbar angeordnet. Die Starttaste steht - ebenfalls nicht erkennbar - mit einem Startkontakt derart in Verbindung, daß der Startkontakt durch Eindrücken der Starttaste betätigt ist und das Ablaufprogramm der Zubereitungsvariante startet, so daß schließlich die Zubereitungsvariante aus den Getränkeausläufen 2 und 3 austritt. In Fig. 1 ist noch ein Ein- und Ausschalter 13 des Espressoautomaten erkennbar, der, weil der Drehknopf des Auswahldrehschalters wenig Platz beansprucht, nahe dessen Zentrum bzw. der Starttaste 1 2 angeordnet sein kann.

In einer Variante nach Fig. 2 ist ein Drehknopf eines Auswahldrehschalters mit 14 bezeichnet. Er trägt wiederum auf seiner Stirnseite nicht gezeigte Symbole (5 - 10) der durch Drehung einstellbaren Zubereitungsvarianten, wobei den Symbolen wiederum eine hier nicht dargestellte Markierung gehäusefest zugeordnet sein kann. Die Auswahl der Getränkevariante erfolgt durch Drehung in eine der beiden möglichen Drehrichtungen gemäß einem Doppelpfeil 15. Zur Auslösung eines Ablaufprogramms der ausgewählten Zubereitungsvariante ist der Drehknopf 14 in seiner Gesamtheit axial senkrecht zur Zeichenebene verschiebbar. Insbesondere ist der Drehknopf 14 zum Auslösen eindrückbar. Anschließend kann er unter Federkraft in seine axiale Ausgangsstellung zurückkehren. Diese Variante hat den Vorteil, daß die Getränkezubereitung der ausgewählten Zubereitungsvariante gestartet werden kann, ohne daß die Bedienungsperson den Drehknopf, den sie unter Umständen noch vor dem Auswahlvorgang ergriffen hält, loslassen muß. - Demgegenüber entfällt bei der Ausführungsform nach Fig. 1 eine axiale Lagerung des Drehknopfes 4.

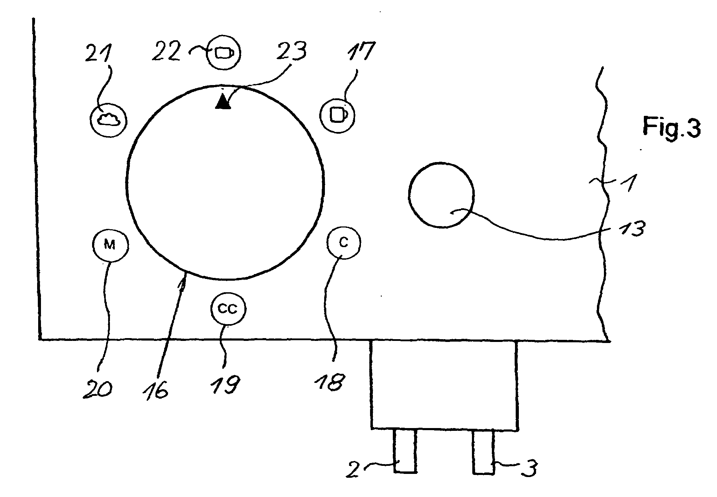

In einer zweiten Variante nach Fig. 3 ist ein Drehknopf eines Auswahldrehschalters mit 16 bezeichnet. Symbole 17 - 22 für die verschiedenen mit dem Auswahldrehschalter wählbaren Getränkevarianten sind hier nicht in den Drehknopf integriert, sondern außerhalb des Drehknopfs 16 in dem Espressoautomatengehäuse 1 ortsfest angeordnet. Für diese Anordnung steht somit eine verhältnismäßig große Fläche zur Verfügung. Ausgewählt ist die Getränkevariante, deren Symbol einer mit dem Drehknopf 16 verstellbaren Markierung 23 am nächsten benachbart ist. Der Drehknopf kann auch hier zur Auslösung des Starts axial verschiebbar sein.

## Patentansprüche

1. Kaffeegetränkzubereitungsautomat, insbesondere Espressoautomat, der geeignet ist, ein Kaffeegetränk einer aus einer Vielzahl von Zubereitungsvarianten auswählbaren Zubereitungsvariante zu erzeugen, wobei eine Vielzahl von Schaltkontaktgruppen vorgesehen ist, von denen je eine einer Zubereitungsvariante zugeordnet ist und von denen jeweils nur eine zur Auswahl einer der Zubereitungsvarianten betätigbar ist, während die anderen Schaltkontaktgruppen gesperrt sind, sowie mit einem Startkontakt, bei dessen Betätigung eine Zubereitung der mit einer der Schaltkontaktgruppen ausgewählten Zubereitungsvariante auslösbar ist,
**dadurch gekennzeichnet,**
**daß** die Schaltkontaktgruppen Bestandteile eines mit einem Drehknopf (4, 14) versehenen rastbaren Auswahldrehschalters sind, dem in jeder rastbaren Drehstellung eine Zubereitungsvariante zugeordnet ist und der in jeder der rastbaren Drehstellungen eine der Kontaktgruppen betätigt, und daß der Auswahldrehschalter (4, 14) weiterhin wenigstens ein Betätigungselement zur Betätigung des Startkontakts umfaßt.

2. Kaffeegetränkzubereitungsautomat nach Anspruch 1,
**dadurch gekennzeichnet,**
**daß** das Betätigungselement zur Betätigung des Startkontakts eine verschiebbare Lagerung wenigstens eines Bestandteiles des Auswahldrehschalters (14) umfaßt, der mit dem Startkontakt in Verbindung steht.

3. Kaffeegetränkzubereitungsautomat nach Anspruch 1,
**dadurch gekennzeichnet,**
**daß** das Betätigungselement eine zentral in dem Drehknopf (4) angeordnete Starttaste (12) ist, die mit dem Startkontakt in Verbindung steht.

4. Kaffeegetränkzubereitungsautomat nach einem oder zwei der vorangehenden Ansprüche,
**dadurch gekennzeichnet,**
**daß** um den Drehknopf des Auswahldrehschalters eine Displayanordnung mit je einem Symbol einer auswählbaren Zubereitungsvariante gerätefest angeordnet ist, auf die eine Markierung des Drehknopfes einstellbar ist.

5. Kaffeegetränkzubereitungsautomat nach einem oder zwei der Ansprüche 1 - 3,
**dadurch gekennzeichnet,**
**daß** eine Displayanordnung mit je einem Symbol einer auswählbaren Zubereitungsvariante auf dem Drehknopf (4, 14) des Auswahldrehschalters in Umfangsrichtung so angeordnet ist, daß jeweils ein Symbol (5 - 10) der Auswahldisplayanordnung auf eine gerätefeste Markierung (11) einstellbar ist.

6. Kaffeegetränkzubereitungsautomat nach Anspruch 1 und einem der Ansprüche 4 und 5,
**dadurch gekennzeichnet,**
**daß** das jeweils mit dem Drehknopf (4 - 14) des Auswahldrehschalters eingestellte Symbol (5 - 10) hinterleuchtet ist.

7. Kaffeegetränkzubereitungsautomat nach den Ansprüchen 4 und 6,
**dadurch gekennzeichnet,**
**daß** nur eine Leuchtdiode vorgesehen ist, die in der Position hinter dem Drehknopf gerätefest angeordnet ist, in der jeweils eines der Symbole am nächsten benachbart zu einer gerätefesten Markierung einstellbar ist.

8. Kaffeegetränkzubereitungsautomat nach den Ansprüchen 4 und 6,
**dadurch gekennzeichnet,**
**daß** hinter jedem Symbol (5 - 10) der Auswahldisplayanordnung eine Leuchtdiode angeordnet ist.

## Claims

1. Coffee machine, particularly espresso machine, suited to generate a coffee beverage from a preparation variant selected from a plurality of preparation variants, wherein a plurality of switch contact groups is provided of which one each is assigned to one preparation variant and of which only one each can be actuated for the selection of one of the preparation variants while the other switching contact groups are locked, and comprising a starter contact on the actuation of which a preparation of the preparation variant selected by means of one of said switch contact groups can be triggered,
**characterized in**
**that** said switch contact groups are components of a lockable selection rotary switch provided with a rotary knob (4, 14) to which in each lockable rotary position a preparation variant is assigned and which in each lockable rotary position actuates one of said contact groups and that said selection rotary switch (4, 14) includes, furthermore, at least one actuation element to actuate said starter contact.

2. Coffee machine according to claim 1,
**characterized in**
**that** said actuation element to actuate said starter contact includes a movable bearing of at least one element of said selection rotary switch (14) which is in contact with said starter contact.

3. Coffee machine according to claim 1,
**characterized in**
**that** said actuation element is a starter button centrally disposed within said rotary knob (4) and connected with said starter contact.

4. Coffee machine according to one or two of the foregoing claims,
**characterized in**
**that** around said rotary knob of said selection rotary switch a display arrangement carrying one symbol for each selectable preparation variant is solidly provided to which a mark of said rotary knob may adjusted.

5. Coffee machine according to one or two of claims 1 to 3,
**characterized in**
**that** a display arrangement carrying a symbol for each selectable preparation variant is arranged on said rotary knob (4, 14) of said selection rotary switch in peripheral direction so that one symbol each (5 to 10) of said selection display arrangement may be adjusted to a marking (11) fixed on the device.

6. Coffee machine according to claim 1 and one of claims 4 and 5,
**characterized in**
**that** the respective symbol (5 - 10) adjusted by means of said rotary knob (4,14) of said selection rotary switch is illuminated from behind.

7. Coffee machine according to claims 4 and 6,
**characterized in**
**that** only one light-emitting diode is provided which is solidly disposed at that position behind said rotary knob, to which one of the symbols each nearest neighbouring a solid marking can be adjusted.

8. Coffee machine according to claims 4 and 6,
**characterized in**
**that** behind each symbol (5 - 10) of said selection display arrangement, a light-emitting diode is disposed.

## Revendications

1. Machine à café, en particulier machine pour préparation d'espresso, qui est appropriée pour obtenir un café d'une variante de préparation pouvant être choisie dans une pluralité de variantes de préparation, une pluralité de groupes de contacts de commutation étant prévue, dont un est attribué à une variante de préparation et dont respectivement seulement un peut être actionné pour le choix de l'une des variantes de préparation, alors que les autres groupes de contacts de commutation sont bloqués, et avec un contact de démarrage, dont l'actionnement permet de déclencher une préparation de la variante choisie avec l'un des groupes de contacts de commutation, **caractérisée en ce que** les groupes de contacts de commutation sont des composants d'un commutateur rotatif de sélection encliquetable, pourvu d'un bouton tournant (4, 14), commutateur auquel est attribuée une variante de préparation dans chaque position de rotation encliquetable et qui actionne dans chacune des positions de rotation encliquetables l'un des groupes de contacts, et **en ce que** le commutateur rotatif de sélection (4, 14) comprend également au moins un élément d'actionnement pour l'actionnement du contact de démarrage.

2. Machine à café selon la revendication 1, **caractérisée en ce que** l'élément d'actionnement pour l'actionnement du contact de démarrage comprend un logement coulissant d'au moins un composant du commutateur rotatif de sélection (14), qui est en liaison avec le contact de démarrage.

3. Machine à café selon la revendication 1, **caractérisée en ce que** l'élément d'actionnement est une touche de démarrage (12) disposée au centre dans le bouton tournant (4), laquelle touche est en liaison avec le contact de démarrage.

4. Machine à café selon l'une quelconque ou deux des revendications précédentes, **caractérisée en ce qu'**un dispositif d'affichage avec respectivement un symbole d'une variante de préparation pouvant être sélectionnée est disposé de façon solidaire de l'appareil autour du bouton tournant du commutateur rotatif de sélection, variante sur laquelle un repère du bouton tournant peut être réglé.

5. Machine à café selon l'une quelconque ou deux des revendications 1 à 3, **caractérisée en ce qu'**un dispositif d'affichage avec respectivement un symbole d'une variante de préparation pouvant être sélectionnée est disposé sur le bouton tournant (4, 14) du commutateur rotatif de sélection dans le sens périphérique de telle sorte qu'à chaque fois un symbole (5 à 10) du dispositif d'affichage de sélection peut être réglé sur un repère (11) solidaire de l'appareil.

6. Machine à café selon la revendication 1 et l'une quelconque des revendications 4 et 5, **caractérisée en ce que** le symbole (5 à 10) réglé respectivement avec le bouton tournant (4, 14) du commutateur rotatif de sélection est rétroéclairé.

7. Machine à café selon les revendications 4 et 6, **caractérisée en ce qu'**il est prévu seulement une diode électroluminescente, qui est disposée dans la position derrière le bouton tournant de façon solidaire de l'appareil, dans laquelle respectivement l'un des symboles peut être réglé le plus près possible à proximité d'un repère solidaire de l'appareil.

8. Machine à café selon les revendications 4 et 6, **caractérisée en ce qu'**une diode électroluminescente est disposée derrière chaque symbole (5 à 10) du dispositif d'affichage de sélection.
